# FASCICULE DE BREVET EUROPEEN

(11) **EP 1 136 314 B1**
(45) Date de publication et mention de la délivrance du brevet: **21.07.2004**
(21) Numéro de dépôt: 01400735.5
(22) Date de dépôt: 21.03.2001
(51) Int. Cl.: B60N 2/58, B60R 21/20

(54) **Siège de véhicule automobile comportant un sac gonflable de sécurité dans une partie latérale de son dossier**
Kraftfahrzeugsitz mit einem aufblasbaren Sicherheitssack in einem seitlichen Teil seiner Rückenlehne
Automotive vehicle seat having an inflatable safety bag in a lateral part of its backrest

(30) Priorité: 22.03.2000 FR 0003678
(43) Date de publication de la demande: 26.09.2001
(73) Titulaire: Peugeot Citroen Automobiles SA, 92200 Neuilly sur Seine (FR)
(72) Inventeur: Rambaud, Bernard, 28120 Illiers Combray (FR)
(74) Mandataire: Bouget, Lucien

(56) Documents cités:
- EP-A- 0 606 179
- EP-A- 0 827 880
- EP-A- 0 953 484
- DE-C- 19 856 972
- FR-A- 2 768 103
- US-A- 5 816 660

## Description

L'invention concerne un siège de véhicule automobile comportant une assise et un dossier ainsi qu'un sac gonflable de sécurité dans une partie latérale du dossier.

On connaît des sièges de véhicule automobile dont l'assise repose sur le plancher du véhicule automobile et dont le dossier monté articulé sur l'assise comporte une ossature métallique et une matelassure en matériau souple recouvrant l'ossature dont la surface externe est recouverte par un tissu de garnissage, appelé coiffe du siège.

De tels sièges de véhicule automobile peuvent comporter un sac gonflable de sécurité disposé dans une partie latérale du dossier, de manière qu'en cas de choc, le sac puisse être gonflé et éjecté du dossier du siège, pour venir s'intercaler entre un passager du siège et une partie latérale de l'habitacle du véhicule automobile. Le dispositif de sécurité à sac gonflable ou airbag latéral est contenu, pendant la marche normale du véhicule automobile, dans un boîtier disposé dans la partie latérale du dossier, à l'intérieur de la matelassure.

On connaît des airbags latéraux de siège de véhicule automobile appelés airbags sous coiffe. Dans ce type d'airbag, l'ouverture de passage de l'airbag permettant sa sortie du boîtier est obturée par la coiffe recouvrant le siège. Le sac gonflable doit déchirer la coiffe, au moment de sa sortie en cas de choc. On favorise généralement la déchirure de la coiffe en prévoyant une couture au droit du passage de sortie du sac gonflable.

On a également proposé, de manière à améliorer les conditions de sortie et donc le fonctionnement du sac gonflable de sécurité, de prévoir une découpe dans la coiffe du dossier du siège, de manière à laisser apparente sur la partie latérale du dossier, une paroi frontale du boîtier qui est susceptible de se briser pour permettre le passage du sac gonflable. La paroi frontale apparente du boîtier se trouve sensiblement dans le prolongement de la surface de la matelassure recouverte par la coiffe, autour de la cavité dans laquelle est placé le boîtier.

Un tel dispositif qui est décrit par exemple dans le FR-2.768.103 (correspondant au préambule de la revendication indépendante) nécessite de fixer le bord du tissu de garnissage entourant la découpe, suivant la périphérie du boîtier. Pour cela, le boîtier comporte une gorge périphérique que externe délimitant un logement de réception du bord de la coiffe suivant lequel est fixé un profilé ayant une section transversale en J.

Le logement de réception du bord de la coiffe et du profilé est dirigé sensiblement perpendiculairement à la surface de la matelassure recouverte par la coiffe, de sorte qu'on doit réaliser un pliage du bord de la coiffe pour introduire le profilé en J à l'intérieur du logement dans lequel on réalise sa fixation par engagement sur un élément d'accrochage sur la paroi interne de la gorge du boîtier.

La partie ouverte du profilé en J est masquée par le tissu qui est replié sensiblement à angle droit à l'intérieur du logement de la gorge. La zone de pliage de la coiffe est une zone d'usure préférentielle, de sorte que la coiffe est susceptible de se découper suivant le pourtour de l'airbag apparent.

Le but de l'invention est donc de proposer un siège de véhicule automobile comportant une assise et un dossier, ainsi qu'un sac gonfable de sécurité dans une partie latérale du dossier qui comporte une matelassure ayant une surface externe recouverte par un tissu de garnissage, le sac gonflable étant placé dans un boîtier disposé à l'intérieur de la matelassure, dans la partie latérale du dossier et fermé par une paroi frontale située sensiblement dans le prolongement de la surface externe de la matelassure recouverte par le tissu de garnissage qui est fixé par au moins un bord solidaire d'au moins un profilé, à l'intérieur d'une gorge à la périphérie du boîtier, la fixation du tissu de garnissage étant réalisée d'une manière améliorée, avec une meilleure tension du tissu sur la matelassure et sans risque de création de zone d'usure ou de détérioration dû tissu de garnissage.

Dans ce but, la gorge disposée à la périphérie du boîtier et recouverte par un bord périphérique de la paroi frontale comporte un logement de réception du profilé et du bord du tissu de garnissage, dans le prolongement de la surface externe de la matelassure recouverte par le tissu de garnissage et un moyen d'accrochage du profilé.

Afin de bien faire comprendre l'invention, qui est définie dans la revendication indépendante, on va maintenant décrire, en se référant aux figures jointes en annexe, un siège de véhicule automobile suivant l'invention et suivant plusieurs variantes de réalisation.
La figure 1 est une vue en élévation latérale d'un siège de véhicule automobile comportant un sac de sécurité gonflable, dans une partie latérale de son dossier.
Les figures 2, 3, 4, 5 et 6 sont des vues en coupe, telles que la coupe 2-2 de la figure 1, d'une partie de bord de l'airbag latéral du siège de véhicule automobile réalisé suivant cinq variantes différentes.
La figure 7 est une vue en plan d'une partie de la coiffe d'un siège de véhicule automobile comportant une découpe et des profilés de fixation sur la périphérie d'un boîtier d'airbag latéral.
La figure 8 est une vue en plan avec arrachement de la face frontale d'un airbag latéral et d'une coiffe fixée à la périphérie du boîtier de l'airbag.
La figure 9 est une vue en perspective d'un siège de véhicule automobile comportant un airbag latéral suivant une nouvelle forme de réalisation.
La figure 10 est une vue en coupe suivant 10-10 de la figure 9.

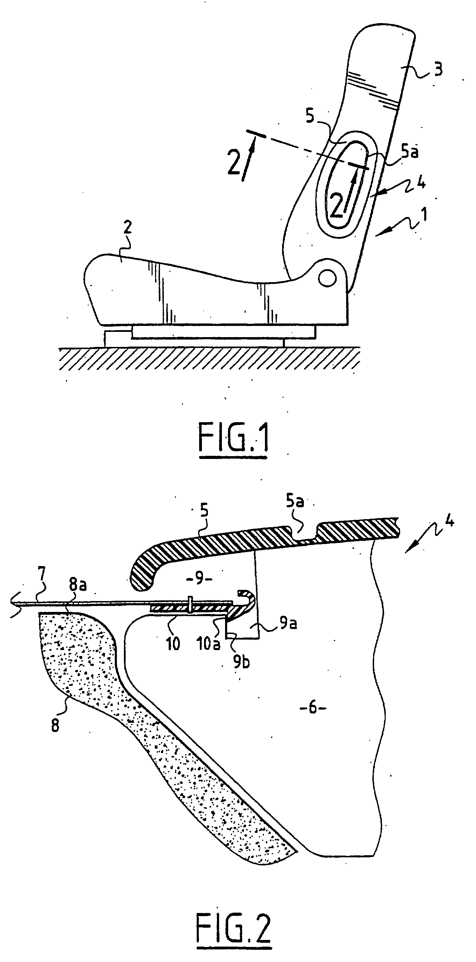

Sur la figure 1, on voit un siège de véhicule automobile désigné de manière générale par le repère 1 qui comporte une assise 2 et un dossier 3 relié à l'assise de manière articulée.

Dans la partie latérale du dossier 3 représentée sur la figure 1, est fixé un airbag latéral 4 qui est de type apparent, la paroi frontale 5 du boîtier de l'airbag n'étant pas recouverte par un tissu de garnissage ou coiffe recouvrant la matelassure du dossier 3

Le tissu de garnissage, ou coiffe du siège, comporte une découpe de forme oblongue suivant la partie latérale du dossier 3 délimitée par un bord de la coiffe qui est engagé et fixé dans la partie périphérique du boîtier de l'airbag.

La paroi frontale 5 du boîtier de l'airbag comporte une zone de rupture 5a suivant laquelle se produit la rupture de la paroi 5, en cas de choc du véhicule automobile et de gonflement du sac gonflable de l'airbag.

Sur la figure 2, on a représenté une partie de bord du boîtier 6 et de la paroi frontale 5 de l'airbag latéral du siège 1 suivant laquelle est fixé un bord de la coiffe 7 du siège de véhicule automobile recouvrant la surface externe 8a de la matelassure 8 du dossier 3 du siège 1.

La matelassure 8 qui recouvre l'ossature métallique du dossier 4 du siège présente dans sa partie latérale une cavité à l'intérieur de laquelle est disposé le boîtier 6 de l'airbag 4. Le boîtier 6 peut être réalisé par exemple en métal et sa paroi frontale 5 en une matière plastique. La paroi frontale 5 comporte une épaisseur réduite suivant la zone de rupture 5a

Le boîtier 6 et la paroi frontale 5 délimitent entre eux, dans leur zone périphérique, une gorge 9 dans laquelle est introduit le bord de la coiffe 7 suivant lequel est fixé, par exemple par couture, un profilé de fixation 10 dont la section transversale est globalement en forme de J.

La paroi frontale apparente 5 du boîtier de l'airbag se trouve sensiblement dans le prolongement de la surface extérieure 8a de la matelassure du dossier 3 du siège recouverte par la coiffe 7.

Selon l'invention, la gorge 9 délimite un logement d'introduction du bord de la coiffe 7 et du profilé 10 dans le prolongement de la surface extérieure 8a de la matelassure 8 sur laquelle est appliquée et tendue la coiffe 7.

De plus, le profilé 10, solidaire du bord de la coiffe 7, et la paroi du boîtier 6 comportent des moyens coopérants de fixation du bord du tissu de garnissage.

De cette manière, il est possible d'assurer une très bonne tension de la coiffe sur la surface extérieure de la matelassure 8 sans imposer à la coiffe un pliage à l'intérieur de la gorge de fixation 9.

La tension et la fixation du bord de la coiffe 7 suivant le contour de l'ouverture dégageant l'airbag sont réalisées en exerçant une poussée sur le profilé 10 pour l'introduire dans la gorge 9, dans une direction se trouvant dans la continuité de la surface externe 8a de la matelassure sur laquelle est appliquée la coiffe 7.

Dans le cas du mode de réalisation représenté sur la figure 2, la gorge 9 délimitée entre la partie périphérique du boîtier 6 de l'airbag et le bord de la paroi frontale 5 est prolongée vers l'intérieur du boîtier par une gorge 9a ayant une direction générale perpendiculaire à la direction d'introduction du profilé 10 et du bord de la coiffe 7 dans le logement de la gorge 9.

Le profilé 10 comporte un rebord d'accrochage 10a sensiblement perpendiculaire à la surface du profilé sur laquelle est fixée la coiffe 7, sur la face du profilé 10 opposée à la coiffe 7. Le rebord 10a est destiné à venir s'accrocher sur un bord 9b de la gorge 9a pour assurer la fixation du bord de la coiffe.

L'introduction et la fixation du bord de la coiffe dans la gorge 9 peuvent être réalisées en utilisant un outil comportant un manche et une lame de poussée qui est introduite dans la partie concave du profilé en J.

La coiffe 7 est fixée sur le profilé 10, par exemple par couture, par collage ou par soudure ou par tout autre moyen, sur la face supérieure interne du profilé 10. c'est-à-dire du côté de la concavité du profil en J, de telle sorte que le bord de la coiffe 7 cache le profilé 10 dans la partie d'entrée de la gorge 9 sous le bord périphérique de la paroi frontale 5.

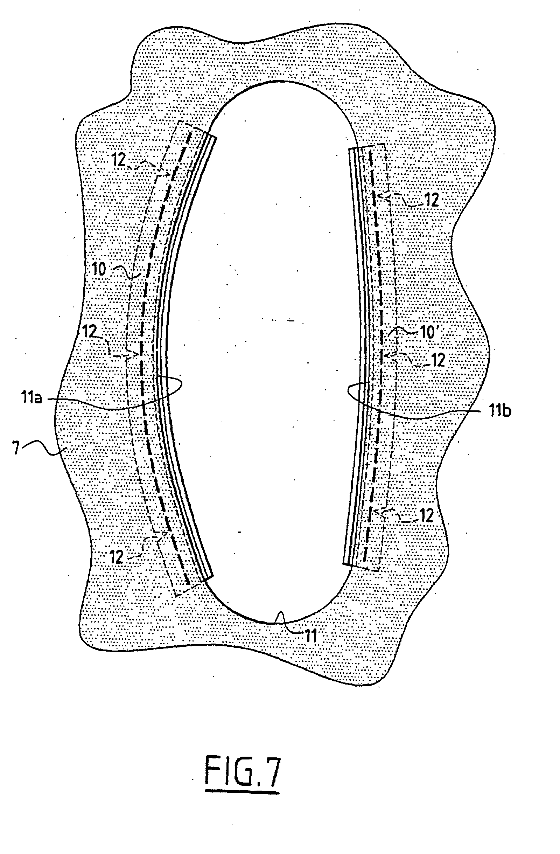

Sur la figure 7, on a représenté une partie de la coiffe 7 entourant la découpe 11 au travers de laquelle la paroi frontale 5 de l'airbag reste apparente sur le côté du siège.

On a également représenté un premier profilé 10 et un second profilé 10' fixés suivant deux bords 11a, 11b opposés à grand rayon de courbure de l'ouverture 11 réalisée par découpe du tissu de garnissage de la coiffe 7. Il est à remarquer que les profilés 10 et 10' ne s'étendent pas jusque dans les zones d'extrémité des bords de la découpe 11 qui présentent une forte courbure.

De manière à s'adapter à une courbure des bords de la découpe, un profilé tel que le profilé 10 ou 10' fixé sur le bord de la coiffe 7 peut présenter des découpes telles que 12.

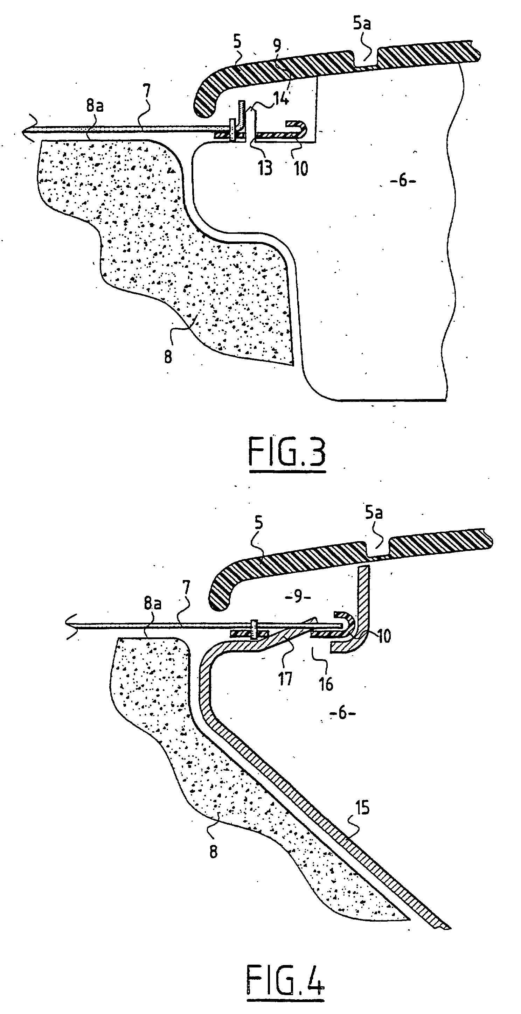

On va maintenant décrire, en se référant aux figures 3, 4, 5 et 6, quatre variantes de réalisation de l'accrochage du bord de la coiffe suivant la périphérie du boîtier de l'airbag latéral, d'un siège de véhicule automobile suivant l'invention.

Les éléments correspondants sur les figures 2 à 6 sont désignés par les mêmes repères.

Dans le cas de la première variante de réalisation représentée sur la figure 3, le profilé 10 comporte des ouvertures 13 qui sont engagées chacune sur un picot 14 en saillie par rapport à la paroi du boîtier 6, à l'intérieur de la gorge 9.

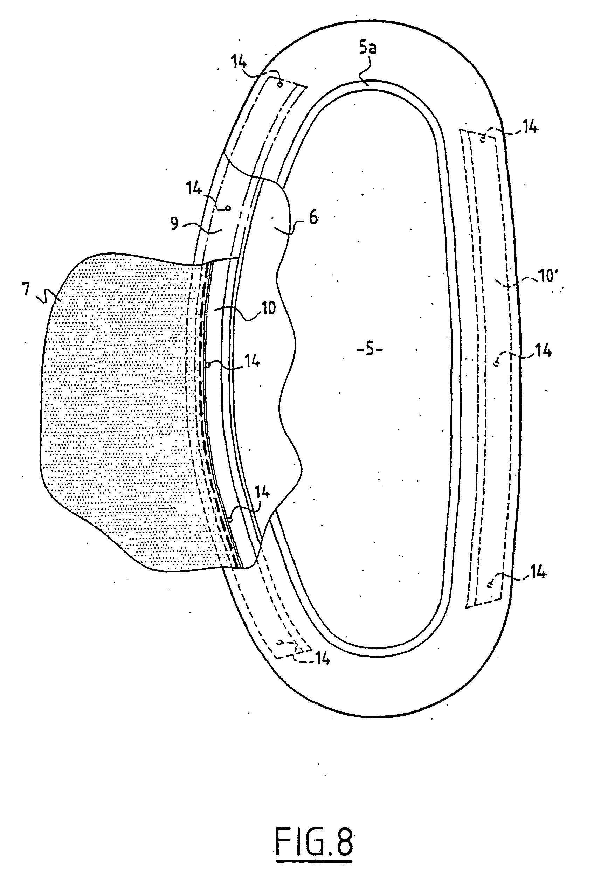

Sur la figure 8, on a représenté les picots 14 en saillie par rapport au boîtier 6 de l'airbag, dans sa partie périphérique, sur lesquels viennent s'accrocher les profilés 10 et 10' traversés par des ouvertures d'engagement des picots.

Sur la figure 4, on a représenté une seconde variante de réalisation dans le cas d'un boîtier d'airbag 6 dont la paroi 15 est réalisée à partir d'une tôle métallique.

Le profilé 10 solidaire du bord de la coiffe 7 comporte des ouvertures 16 de grandes dimensions qui sont engagées sur des crevés 17 de la paroi 15 en saillie dans la gorge 9 suivant la périphérie du boîtier. On réalise ainsi l'accrochage et la tension de la coiffe 7 sur la surface extérieure 8a de la matelassure 8.

Les crevés 17 de la paroi du boîtier 6 peuvent être disposés en des emplacements identiques aux emplacements des picots 14 représentés sur la figure 8.

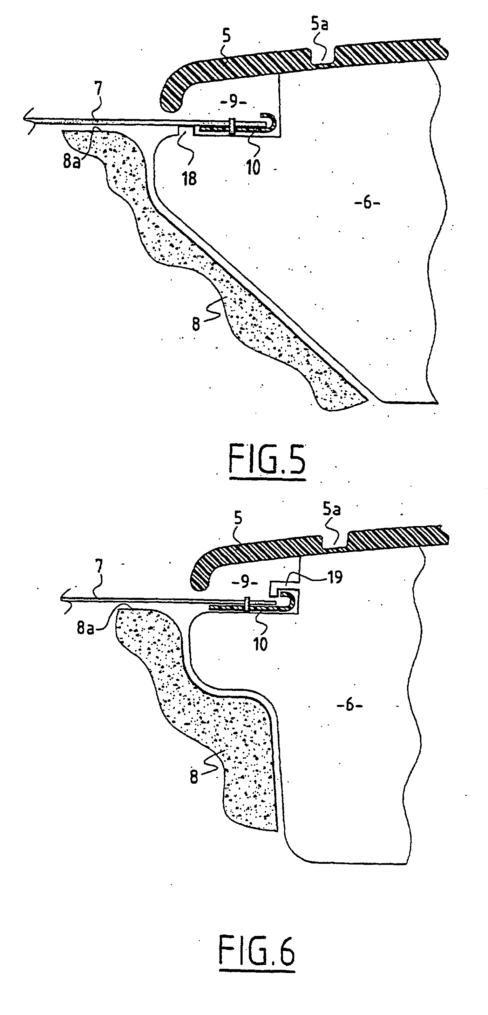

Sur la figure 5, on a représenté une troisième variante des moyens d'accrochage du bord de la coiffe 7 à l'intérieur de la gorge 9 du boîtier 6 de l'airbag.

La paroi du boîtier 7 de l'airbag comporte une partie 18 en saillie à l'intérieur de la gorge 9, au voisinage de l'entrée du logement dans lequel on engage le profilé 10. Le bord de la coiffe 7 est fixé sur la surface supérieure du profilé ou surface interne. Le bord arrière du profilé 10 est retenu par la partie en saillie 18 du boîtier 6, après son engagement à l'intérieur de la gorge 9, dans une direction située dans le prolongement de la surface supérieure 8a de la matelassure 8 sur laquelle est tendue la coiffe 7.

Sur la figure 6, on a représenté une quatrième variante des moyens d'accrochage du bord de la coiffe 7, sur une partie périphérique du boîtier 6 de l'airbag.

Le boîtier 6 de l'airbag présente, sur une paroi constituant le fond de la gorge 9 dans une direction d'introduction du profilé, une partie en saillie 19 en forme de crochet. Lorsqu'on introduit dans la gorge 9, le profilé 10 à section transversale en forme de J sur la surface supérieure interne duquel est fixé le bord de la coiffe 7, la partie courbe du profil vient se loger derrière le crochet 19, de telle manière que le crochet 19 assure sa retenue.

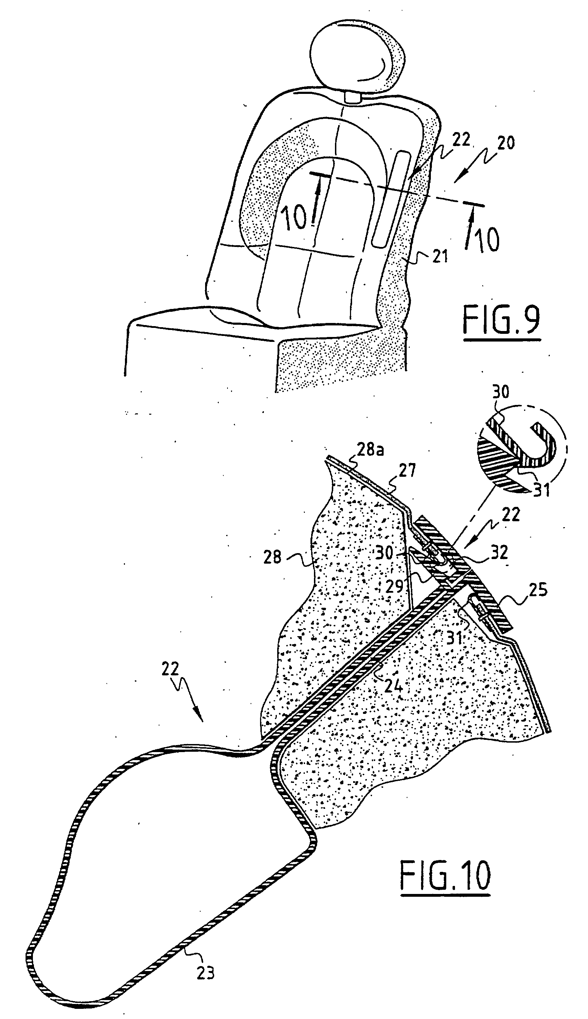

L'invention s'applique également dans le cas d'un siège de véhicule automobile 20 tel que représenté sur la figure 9 comportant un dossier 21 sur lequel est prévu un airbag latéral 22 d'un type nouveau, faisant l'objet d'une demande de brevet déposée le même jour que la présente demande.

L'airbag latéral 22, appelé airbag semi sous-coiffe comporte un boîtier 23 renfermant le sac gonflable et réalisé en une matière plastique telle que le boîtier 23 puisse s'ouvrir, par gonflement du sac, sans former d'éclat. Le boîtier 23 comporte un col 24 terminé par une paroi frontale 25 en deux parties permettant le passage du sac gonflable au moment du déclenchement de l'airbag.

La coiffe 27 du dossier 21 du siège 20, qui est tendue sur la surface externe 28a de la matelassure du dossier, comporte un bord sur lequel est fixé un profilé en matière plastique 30, de manière à réaliser la fixation du bord de la coiffe 27 en-dessous de la paroi frontale 25 du boîtier de l'airbag. Pour cela, on prévoit une crémaillère 29 d'accrochage du profilé 30 qui comporte un ergot 31 d'accrochage sur une dent de la crémaillère 29. La mise en tension et l'accrochage de la coiffe 27 sont réalisés en introduisant le bord de la coiffe sur lequel est fixé le profilé 30, dans une gorge 32 délimitée entre la paroi frontale 25 et la matelassure 28. La gorge 32 comporte un logement d'introduction du bord de la coiffe 27 et du profilé 30 dans une direction située dans le prolongement de la surface externe 28a de la matelassure 28 sur laquelle est rapportée et tendue la coiffe 27.

De manière à régler la tension de la coiffe 27, on peut prévoir une crémaillère 29 comportant plusieurs dents d'accrochage successives. De préférence, la crémaillère 29 est réalisée par moulage en une seule pièce avec le col 24 du boîtier 23 de l'airbag 22.

Dans tous les cas, la tension et la fixation du bord de la coiffe 27 sont réalisées pratiquement sans avoir à replier une partie de la coiffe à l'intérieur d'une gorge du boîtier de l'airbag. On évite ainsi une détérioration de la coiffe au niveau d'une ligne de pliage. En outre, les modes d'accrochage selon l'invention permettent de régler facilement la tension de la coiffe et d'obtenir un meilleur aspect du siège de véhicule automobile.

L'invention ne se limite pas aux modes de réalisation qui ont été décrits.

On peut prévoir d'autres formes de gorge en-dessous de la paroi frontale du boîtier de l'airbag, formant un logement dans le prolongement de la surface externe de la matelassure sur laquelle on fixe la coiffe et différents modes de fixation du bord de la coiffe, par l'intermédiaire d'un profilé.

## Revendications

1. Siège (1; 20) de véhicule automobile comportant une assise (2) et un dossier (3; 21), ainsi qu'un sac gonflable de sécurité (4; 22), dans une partie latérale du dossier (3) qui comporte une matelassure (8; 28) ayant une surface externe (8a; 28a) recouverte par un tissu de garnissage (7; 27), le sac gonflable étant placé dans un boîtier (6; 23) disposé à l'intérieur de la matelassure (8; 28), dans la partie latérale du dossier (3; 21) et fermé par une paroi frontale (5; 25) située sensiblement dans le prolongement de la surface externe (8a; 28a) de la matelassure (8; 28) recouverte par le tissu de garnissage (7; 27) qui est fixé par au moins un bord solidaire d'au moins un profilé (10; 30), à l'intérieur d'une gorge (9; 32) à la périphérie du boîtier (6; 23) ledit profilé comportant un moyen d'accrochage (9b, 14, 17, 18, 19; 31), **caractérisé par le fait que** la gorge (9; 32) disposée à la périphérie du boîtier (6; 23) et recouverte par un bord périphérique de la paroi frontale (5; 25), comporte un logement de réception du profilé (10. 10; 30) et du bord du tissu de garnissage (7; 27), dans le prolongement de la surface externe (8a; 28a) de la matelassure (8; 28) recouverte par le tissu de garnissage (7; 27), et ledit moyen d'accrochage (9b, 14, 17, 18, 19;31) du profilé (10, 10'; 30).

2. Siège suivant la revendication 1, **caractérisé par le fait que** le profilé (10) comporte sur une face opposée au bord du tissu de garnissage (7), un rebord (10a) d'accrochage du profilé sur une paroi (9b) d'une gorge d'accrochage (9a) de direction sensiblement perpendiculaire à une direction d'engagement du profilé (10) et du bord du tissu de garnissage (7) dans le logement de la gorge (9).

3. Siège suivant la revendication 1, **caractérisé par le fait que** le profilé (10) sur lequel est fixé le bord du tissu de garnissage (7) est traversé par au moins une ouverture (13) d'accrochage sur au moins un picot (14) en saillie par rapport à une paroi du boîtier (6) du sac gonflable de sécurité, à l'intérieur de la gorge (9).

4. Siège suivant la revendication 1, **caractérisé par** le fait le boîtier (6) du sac gonflable comporte au moins une paroi (15) en tôle et que le profilé (10) solidaire du bord du tissu de garnissage (7) comporte au moins une ouverture traversante (16) d'accrochage sur au moins un crevé (17) de la paroi (15) en tôle du boîtier (6) du sac gonflable en saillie à l'intérieur de la gorge (9) du boîtier (6) du sac gonflable.

5. Siège suivant la revendication 1, **caractérisé par le fait que** la paroi du boîtier (6) comporte au moins une partie (18) en saillie à l'intérieur de la gorge périphérique (9) du boîtier (6), de manière à assurer la retenue du profilé (10) solidaire du bord du tissu de garnissage (7) introduit dans le logement de la gorge (9).

6. Siège suivant la revendication 1, **caractérisé par le fait qu'**une paroi du boîtier (6) dans le fond du logement de la gorge (9) comporte une partie en saillie (19) à l'intérieur de la gorge (9) en forme de crochet pour la retenue du profilé (10) solidaire du bord de la coiffe (7) du dossier (3) du siège de véhicule automobile.

7. Siège de véhicule automobile suivant l'une quelconque des revendications 1 à 6, **caractérisé par le fait que** le profilé (10, 10') solidaire du bord du tissu de garnissage (7) du dossier (3) du siège (1) de véhicule automobile présente une section transversale ayant la forme générale d'un J.

8. Siège de véhicule automobile suivant l'une quelconque des revendications 1 à 7, **caractérisé par le fait que** le tissu de garnissage (7) du dossier (3) du siège (1) du véhicule automobile comporte une découpe (11) présentant deux bords opposés (11a, 11b) ayant un grand rayon de courbure et qu'un premier profilé (10) et un second profilé (10') sont fixés suivant les bords opposés à grand rayon de courbure (11a, 11b) de la découpe (11) du tissu de garnissage (7).

9. Siège de véhicule automobile suivant la revendication 1, **caractérisé par le fait que** le boîtier (6) du sac gonflable de sécurité disposé à l'intérieur de la matelassure comporte un col (24) de sortie du sac gonflable et une paroi frontale (25) à une extrémité de sortie du col (24) opposée au boîtier (23), située sensiblement dans le prolongement de la surface externe (28a) de la matelassure (28) du siège (20) de véhicule automobile sur laquelle est rapportée et fixée une coiffe en tissu de garnissage (27), la paroi frontale (25) du boîtier du sac gonflable de sécurité délimitant avec la matelassure (28) du siège, une gorge (32) comportant au moins un logement d'introduction et de fixation d'au moins un bord du tissu de garnissage (27) sur lequel est fixé un profilé (30), dans le prolongement de la surface externe (28a) de la matelassure (28).

10. Siège suivant la revendication 9, **caractérisé par le fait qu'**un moyen d'accrochage (29) en forme de crémaillère est disposé à l'intérieur de la gorge (32) et comporte au moins une dent d'accrochage d'un ergot (31) en saillie sur le profilé (30) solidaire du bord du tissu de garnissage (27) du siège (20).

## Patentansprüche

1. Kraftfahrzeugsitz (1; 20) mit einem Sitzteil (2) und einer Rückenlehne (3; 21), sowie mit einem aufblasbaren Sicherheitssack (4; 22) in einem seitlichen Teil der Rückenlehne (3), welcher eine Polsterung (8; 28) mit einer äußeren Fläche (8a; 28a) aufweist, die mit einem Bezugsstoff (7; 27) abgedeckt ist, wobei der aufblasbare Sack in einem sich im Inneren der Polsterung (8; 28) befindenden Gehäuse (6; 23) in dem seitlichen Teil der Rückenlehne (3) angeordnet und mit einer Stirnwand (5; 25) verschlossen ist, welche im Wesentlichen in der Verlängerung der mit dem Bezugsstoff (7; 27) abgedeckten äußeren Fläche (8a; 28) der Polsterung (8, 28) angeordnet ist, und welche mit mindestens einem Rand, der fest mit einem Profilblech (10; 30) verbunden ist, am Inneren einer Kehle (9; 32) an der Peripherie des Gehäuses (6; 23) befestigt ist, wobei das Profilblech eine Einrichtung zum Einhaken (9b, 14, 17, 18, 19; 31) aufweist, **dadurch gekennzeichnet, dass** die an der Peripherie des Gehäuses (6; 23) angeordnete und durch einen Umfangsrand der Stirnwand (5; 25) abgedeckte Kehle (9; 32) eine Unterbringung zur Aufnahme des Profilblechs (10, 10'; 30) und des Rands des Bezugsstoffs (7; 27) in der Verlängerung der mit dem Bezugsstoff (7; 27) abgedeckten äußeren Fläche (8a; 28) der Polsterung (8, 28) und die Einrichtung zum Einhaken (9b, 14, 17, 18, 19; 31) des Profilblechs (10, 10'; 30) aufweist

2. Kraftfahrzeugsitz nach Anspruch 1, **dadurch gekennzeichnet, dass** das Profilblech (10) auf einer dem Rand des Bezugsstoffs (7) gegenüberliegenden Seite einen Rand (10a) zum Einhaken des Profilblechs an einer Wand (9b) einer Ausnehmung (9a) zum Einhaken aufweist, der in einer im Wesentlichen senkrecht zu einer Eingriffsrichtung des Profilblechs (10) und des Rands des Bezugsstoffs (7) in der Unterbringung der Kehle (9) stehenden Richtung verläuft.

3. Kraftfahrzeugsitz nach Anspruch 1, **dadurch gekennzeichnet, dass** das Profilblech (10), auf welchem der Rand des Bezugsstoffs (7) befestigt ist, von mindestens einer Öffnung (13) zum Einhaken auf mindestens einem Zackenvorsprung (14) bzw. Spitzenvorsprung in Bezug auf eine Wand des Gehäuses (6) des aufblasbaren Sicherheitssacks im Inneren der Ausnehmung durchdrungen ist.

4. Kraftfahrzeugsitz nach Anspruch 1, **dadurch gekennzeichnet, dass** das Gehäuse (6) des aufblasbaren Sicherheitssacks mindestens eine Wand (15) aus Blech aufweist, und dass das fest mit dem Rand des Bezugsstoffs (7) verbundene Profilblech (10) mindestens eine hindurchgehende Öffnung (16) zum Einhaken auf wenigstens einem ausgestanzten und in das Innere der Kehle (9) des Gehäuses (6) des aufblasbaren Sacks hochgebogenen Lappen (17) der Wand (15) im Blech des Gehäuses (6) des aufblasbaren Sacks aufweist.

5. Kraftfahrzeugsitz nach Anspruch 1, **dadurch gekennzeichnet, dass** die Wand des Gehäuses (6) mindestens einen in das Innere der peripheren Kehle (9) des Gehäuses (6) hervorstehenden Abschnitt (18) aufweist, so dass das Zurückhalten des fest mit dem Rand des Bezugsstoffs (7) verbundenen Profilblechs (10), welches in die Unterbringung der Kehle (9) eingebracht ist, gewährleistet ist.

6. Kraftfahrzeugsitz nach Anspruch 1, **dadurch gekennzeichnet, dass** eine Wand des Gehäuses (6) im Boden der Unterbringung der Kehle (9) einen in das Innere der Kehle (9) hervorstehenden Abschnitt (19) in Form eines Hakens zur Zurückhaltung des Profilblechs (10) aufweist, das fest mit dem Rand der Abdeckung (7) der Rückenlehne (3) des Kraftfahrzeugsitzes verbunden ist.

7. Kraftfahrzeugsitz nach einem der Ansprüche 1 bis 6, **dadurch gekennzeichnet, dass** das fest mit dem Rand des Bezugsstoffs (7) der Rückenlehne (3) des Kraftfahrzeugsitzes (1) verbundene Profilblech (10, 10') einen Querschnitt in der allgemeinen Form eines J aufweist.

8. Kraftfahrzeugsitz nach einem der Ansprüche 1 bis 7, **dadurch gekennzeichnet, dass** der Bezugsstoff (7) der Rückenlehne (3) des Kraftfahrzeugsitzes (1) einen Ausschnitt (11) mit zwei gegenüberliegenden Rändern (11a; 11b) mit einem großen Krümmungshalbmesser aufweist, und dass ein erstes Profilblech (10) und ein zweites Profilblech (10') entlang der gegenüberliegenden Ränder (11a; 11b) mit großem Krümmungshalbmesser des Ausschnitts (11) des Bezugsstoffs (7) angebracht sind.

9. Kraftfahrzeugsitz nach Anspruch 1, **dadurch gekennzeichnet, dass** das im Inneren der Polsterung angeordnete Gehäuse (6) des aufblasbaren Sicherheitssacks einen Austrittshals (24) des aufblasbaren Sacks und eine dem Gehäuse (23) gegenüberliegende Stirnwand (25) an einem Ende des Ausgangs des Halses (24) aufweist, welche im Wesentlichen in der Verlängerung der äußeren Fläche (28a) der Polsterung (28) des Kraftfahrzeugsitzes angeordnet ist, auf welcher eine Abdeckung aus Bezugsstoff (27) aufgebracht und befestigt ist, wobei die Stirnwand (25) des Gehäuses des aufblasbaren Sicherheitssacks mit der Polsterung (28) des Sitzes eine Kehle (32) bildet, welche mindestens eine Unterbringung zur Einführung und Befestigung von mindestens einem Rand des Bezugsstoffs (27) aufweist, auf welchem ein Profilblech (30) in der Verlängerung der äußeren Fläche (28a) der Polsterung (28) befestigt ist.

10. Kraftfahrzeugsitz nach Anspruch 9, **dadurch gekennzeichnet, dass** im Inneren der Kehle (32) eine Einrichtung (29) zum Einhaken in Form einer Zahnstange angeordnet ist und mindestens einen Zahn zum Einhaken an einem Anschlag (31) aufweist, der auf dem fest mit dem Rand des Bezugsstoffs (27) des Sitzes (20) verbundenen Profilblech (30) hervorsteht.

## Claims

1. Motor vehicle seat (1; 20) comprising a seat (2) and a seat back (3; 21) as well as an inflatable safety bag (4; 22) in a side part of the seat back (3) which has padding (8; 28) with an outer surface (8a; 28a) covered in an upholstery fabric (7: 27), the inflatable bag being placed in a housing (6; 23) arranged inside the padding (8; 28) in the side of the seat back (3; 21) and closed by a front wall (5; 25) located more or less in the extension of the outer surface (8a; 28a) of the padding (8, 28) covered with an upholstery fabric (7; 27) which is fixed by at least one edge integral with at least one profile (20; 30) inside a groove (3; 32) at the periphery of the housing (6; 23), the said profile having a means of attachment (9b, 14, 17, 18, 19; 31), **characterised in that** the groove (3; 32) arranged at the periphery of the housing (6; 23) and covered by a peripheral edge of the front wall (5; 25) has a housing to take the profile (10, 10'; 30) and the edge of the upholstery fabric (7: 27) in the extension of the outer surface (8a; 28a) of the padding (8; 28) covered by the upholstery fabric (17; 27), and the said means of attachment (9b, 14, 17, 18, 19; 31)) of the profile (10, 10'; 30).

2. Seat according to Claim 1, **characterised in that** the profile (10) has on a face opposite to the edge of the upholstery fabric (7), a turn-up (10a) for attaching the profile to one wall (9b) of an attachment groove (9a) in a direction more or less perpendicular to a direction for engagement of the profile (10) and the edge of the upholstery fabric (7) in the housing of the groove (9).

3. Seat according to Claim 1, **characterised in that** the profile (10) to which the edge of the upholstery fabric (7) is fixed has at least one opening (13) through it for attachment to at least one barb (14) projecting beyond one wall of the housing (6) of the inflatable safety bag, inside the groove (9).

4. Seat according to Claim 1, **characterised in that** the housing (6) of the inflatable bag has at least one sheet metal wall (15) and **in that** the profile (10) integral with the edge of the upholstery fabric (7) has at least one through opening (16) for attachment to at least one slash (17) in the sheet metal wall (15) of the housing (6) of the inflatable bag projecting inside the groove (9) of the housing (6) of the inflatable bag.

5. Seat according to Claim 1, **characterised in that** the wall of the housing (6) has at least a part (18) projecting inside the peripheral groove (9) of the housing (6) so as to ensure retention of the profile (10) integral with the edge of the upholstery fabric (7) inserted into the housing of the groove (9).

6. Seat according to Claim 1, **characterised in that** one wall of the housing (6) in the bottom of the housing of the groove (9) has a projecting part (19) inside the groove (9) in the form of a hook to retain the profile (10) integral with the edge of the cap (7) of the motor vehicle seat back (3).

7. Motor vehicle seat according to any one of the Claims 1 to 6, **characterised in that** the profile (10, 10') integral with the edge of the upholstery fabric (7) of the back (3) of the motor vehicle seat (1) has a cross section in the general shape of a J.

8. Motor vehicle seat according to any one of the Claims 1 to 7, **characterised in that** the upholstery fabric (7) of the back (3) of the motor vehicle seat (1) has a cut-out (11) which has two opposite edges (11a, 11b) with a large radius of curvature and by the fact that a first profile (10) and a second profile (10') are fixed along the opposite edges with a large radius of curvature (1 1a, 11b) of the cut-out (11) of the upholstery fabric (7).

9. Motor vehicle seat according to Claim 1, **characterised in that** the housing (6) of the inflatable safety bag arranged inside the padding has a neck (24) coming out from the inflatable bag and a front wall (25) at one outlet end of the neck (24) opposite to the housing (23), located more or less in the extension of the outer surface (28a) of the padding (28) of the motor vehicle seat (20) on which is inset and fixed a cap made from upholstery fabric (27), the front wall (25) of the inflatable safety bag housing delineating with the padding (28) of the seat, a groove (32) which has at least one housing for inserting and fixing at least one edge of the upholstery fabric (27) to which is fixed a profile (30), into the extension of the outer surface (28a) of the padding (28).

10. Seat according to Claim 9, **characterised in that** a means of attachment (29) in the form of a rack is arranged inside the groove (32) and has at least one tooth for hooking on to a lug (31) projecting on the profile (30) integral with the edge of the upholstery fabric (27) of the seat (20).
